# EUROPÄISCHE PATENTSCHRIFT

(11) **EP 1 301 975 B1**
(45) Veröffentlichungstag und Bekanntmachung des Hinweises auf die Patenterteilung: **04.10.2006**
(21) Anmeldenummer: 01943435.6
(22) Anmeldetag: 23.05.2001
(51) Int. Cl.: H02K 1/18

(54) **STATORTRÄGER**
STATOR SUPPORT
SUPPORT DE STATOR

(30) Priorität: 10.07.2000 DE 10033233
(43) Veröffentlichungstag der Anmeldung: 16.04.2003
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/005912
(87) Internationale Veröffentlichungsnummer: WO 2002/005408

(56) Entgegenhaltungen:
- EP-A- 0 744 313
- US-A- 4 060 744
- US-A- 5 844 341

## Beschreibung

Die vorliegende Erfindung betrifft eine Windenergieanlage mit einem Generator mit Stator und Rotor in einem Maschinenhaus, welches an der Spitze des Turmes der Windenergieanlage angeordnet ist, wobei der Stator über eine Tragkonstruktion, bestehend aus mehreren Tragarmen, verfügt. Der Generator ist hierbei ein Ringgenerator.

Solche Windenergieanlagen sind bekannt und werden bereits in großer Stückzahl eingesetzt. Dabei geht die Entwicklung von Windenergieanlagen heute noch weiter in Richtung einer höheren Generatorleistung. Damit einher geht regelmäßig eine Erhögung der Abmessungen der einzelnen Komponenten (insbesondere deren Tragarme) und damit deren Masse.

Der Stand der Technik kennt heute bereits Windenergieanlagen, deren Gondelgewicht (Maschinenhausgewicht) im Bereich von 90 - 100 t liegt. Dabei trägt der Statorträger, an dem der Stator des Generators befestigt ist, zu dieser Masse bei. Solche großen Massen sind jedoch nur noch schwer handhabbar und erzeugen hohe Lasten auf den Turm sowie das Turmfundament, was insgesamt zu einer erhöhten Materialbelastung, aber auch zu einer Erhöhung der Kosten der einzelnen vorgenannten Teile einer Windenergieanlage führt. Zur Verdeutlichung sei darauf hingewiesen, dass die Gondeln (also das Maschinenhaus) der Windenergieanlagen nicht nur zur Baustelle transportiert werden, sondern dort regelmäßig in Einzelteilen auf die Spitze des Turmes gehoben werden müssen.

Ein weiteres Problem bei Windenergieanlagen, das neben bauordnungsrechtlichen Fragen im Wesentlichen die Akzeptanz solcher Anlagen insbesondere in der jeweiligen Nachbarschaft betrifft, betrifft das Thema Schallemissionen, denn auch die von modernen Windenergieanlagen ausgehenden Schallemissionen können in unmittelbarer Nachbarschaft stören wirken und damit die Aktzeptanz solcher Anlagen verringern.

Ein Teil der Schallemissionen wird von den Tragarmen erzeugt, da diese Tragarme innen hohl sind und geschlossene Außenflächen haben, so dass dadurch ein Resonanzkörper gebildet wird.

Daher ist es eine Ausgabe der vorliegenden Erfindung, eine Windenergieanlage anzugeben, deren Bauteilgewichte reduziert werden und deren Schallemission verringert sind.

US-A-4 060 744 offenbart eine Vorrichtung mit dem Merkmalen der Oberbegriffe der unabhängigen Ansprüche.

Diese Aufgabe wird erfindungsgemäß durch die Merkmale der unabhängigen Ansprüche gelöst. Bevorzugte Ausgestaltungen sind in den abhängigen Ansprüche definiert. Der Statorträger weist eine offene Struktur auf. Durch diese offene Struktur ergeben sich einerseits Gewichtseinsparungen durch verringerten Materialeinsatz. Andererseits werden auch Schallemissionen verringert, da die Tragarme durch ihre offenen Struktur keine Resonanzkörper mehr bilden können und somit wenigstens die Schallemission der Tragarme entfallen.

Ein erfindungsgemäßer Statorträger trägt daher mit seiner gegenüber der bekannten Bauweise verringerten Masse zu einer Verringerung der Gondelmasse bei, und damit auch zu einer besseren Handhabbarkeit und Transportierbarkeit der Komponenten bzw. der gesamten Gondel.

Im Folgenden wird eine Ausführungsform anhand der Figuren näher beschrieben. Dabei zeigen:
- Fig. 1: eine Seitenansich eines erfindungsgemäßen Tragarmes; und
- Fig. 2: eine Vorderansicht eines erfindungsgemäßen Statorträgers mit mehreren Tragarmen.

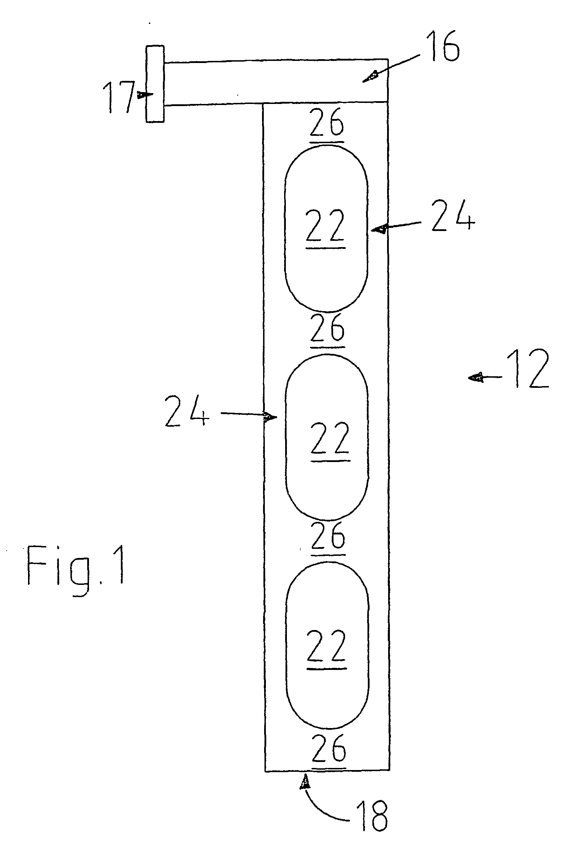

Der in Fig. 1 in einer Seitenansicht gezeigte Tragarm 12 weist eine offene Struktur auf, so dass kein Resonanzkörper gebildet wird. Von einer Basis 18 des Tragarmes 12 aufsteigend sind mehrere Öffnungen 22 in dem Tragarm 12 erkennbar, so dass die Struktur des Tragarmes aus seitlichen Stäben 24 und dazwischen verlaufenden Querstreben (Traversen) 26 gebildet ist. Somit bildet der Tragarm 12 keinen Resonanzkörper und es können demnach keine Schallemissionen entstehen.

Der erfindungsgemäße Tragarm 12 erstreckt sich von der Basis 18 aus eine vorgegebene Strecke, die sich aus der Größe des an dem Tragarm 12 zu befestigenden Stators 20 ergibt. An dem der Basis 18 gegenüberliegenden Ende des Tragarmes 12 verläuft ein Abschnitt 16 im rechten Winkel zu dem Tragarm 12 und weist an seinem Ende eine Tragplatte 17 auf. An dieser Tragplatte 17 wird der Stator 20 befestigt. Dabei kann die Tragplatte 17 eine größere Flache als die Querschnittsfläche des Abschnittes 16 aufweisen.

In der in Fig. 1 dargestellten Ausführungsform des erfindungsgemäßen Tragarmes 12 ist die Tiefe (die horizontale Ausdehnung in der Fig.) konstant. Diese kann jedoch alternativ variieren und somit eine Querschnittsveränderung des erfindungsgemäßen Tragarmes 12 erlauben.

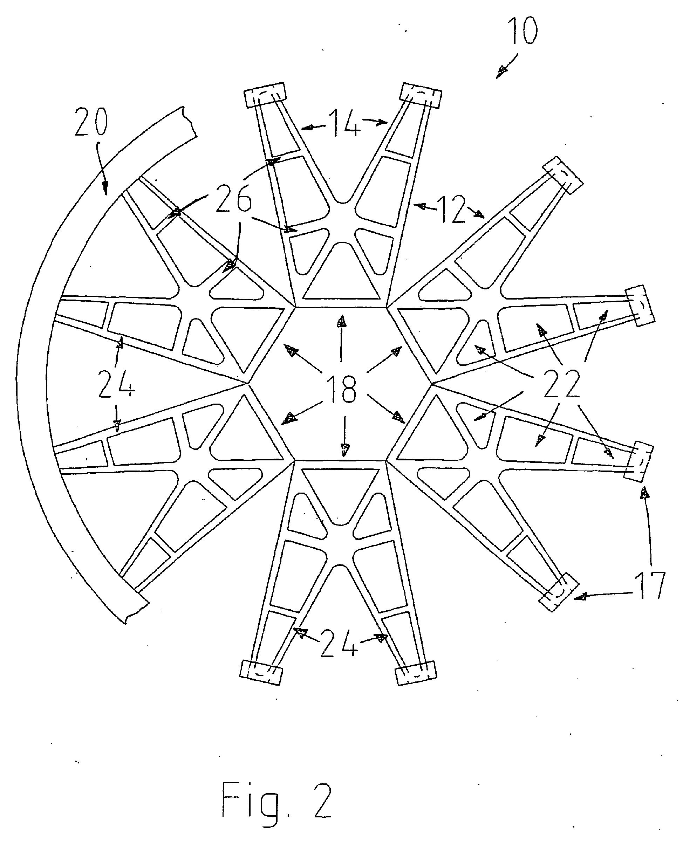

Fig. 2 zeigt eines aus mehreren erfindungsgemäßen Tragarmen 12 gebildeten Statorträgern 10 in einer Draufsicht. Dabei ist die offene, fachwerkartige Struktur der Tragarme 12 gut zu erkennen, die durch Stäbe 24 und Querstreben (Traversen) 26 gebildet ist.

Die Tragarme 12 weisen somit eine offene Struktur auf und bilden mit ihren nach innen gerichteten Basen 18 eine Öffnung, durch die eine Rotorachse (ein Rotorzapfen) hindurchgreifen kann. Dabei können die Tragarme 12 als Einzelelemente verwendet werden. Alternativ können die Tragarme 12 z. B. im Bereich ihrer Basen 18 zu einem einstückigen Statorträger 10 oder zu mehreren Statorträger-Segmenten miteinander verbunden werdne, die ihrerseits wiederum einzeln eingesetzt oder zu einem einstückigen Statorträger 10 verbunden werden können.

Das radial nach außen gerichtete Ende jedes Tragarmes 12 teilt sich in zwei Ausleger 14. Der rechtwinklig abgeknickte, äußere Abschnitt 16 jedes Auslegers 14 verläuft in axialer Richtung parallel zu der Richtung der Rotorachse. Dabei ist die Fläche der Tragplatte 17, an welcher der Stator befestigt wird, größer als die Querschnittsfläche des Abschnittes 16.

Der Querschnitt des Auslegers 14 verringert sich von der Basis 18 ausgehend zu seinem äußeren Ende, also zu dem abgewinkelten Abschnitt 16 hin. Dabei ergibt sich diese Querschnittsänderung bei einem Tragarm 12 der hier gezeigten Ausführungsform bei gleichbleibender Tiefe (horizontale Ausdehnung des in Fig.1 dargestellten Tragarmes) aus einer sich verringernden Breite (horizontale Ausdehnung der Tragarme 12 in Fig. 2) inbesondere im Bereich der Ausleger 14. Alternativ können Tiefe und Breite des erfindungsgemäßen Tragarmes 12 variieren.

Zur Verdeutlichung der Anwendung ist ein Abschnitt des Stators 20 exemplarisch in einer Einbausituation dargestellt. Tatsächlich erstreckt sich der Stator 20 ringförmig über den gesamten äußeren Umfang des Statorträgers 10 und ist dabei um das Maß von dem Statorträger beabstandet, um das die Tragplatte 17 durch den Abschnitt 16 von dem Ausleger 14 entfernt ist.

In einer (nicht dargestellten) Ausführungsform der Erfindung sind die Tragarme 12, entweder einzeln, als Segmente oder als einstückiger Statorträger 10 an einer Unterkonstruktion (nicht dargestellt) angebracht, die wiederum mit dem Maschinenhaus der Windenergieanlage fest verbunden ist.

## Patentansprüche

1. Ringgenerator, mit
einem Stator, welcher einen Statorring und Statorwickiungen aufweist, einem Läufer, und
einer Tragkonstruktion zum Halten des Stators, wobei
die Tragkonstruktion mehrere Tragarme aufweist, **dadurch gekennzeichnet, dass** die Tragarme jeweils aus einer Statjkonstruktion bestehen, wobei eine Tragplatte zum Befestigen des Stators an einem Ende eines Tragarmes derart angebracht ist, dass die Tragplatte axial zu der Tragkonstruktion beabstandet ist.

2. Windenergieanlage mit einem Generator nach Anspruch 1.

3. Windenergieanlage nach Anspruch 2,
**dadurch gekennzeichnet, dass** sich wenigstens ein Tragarm (12) des Statorträgers (10) in wenigstens zwei Ausleger (14) aufteilt.

4. Windenergieetnlage nach einem der Ansprüche 2 oder 3,
**dadurch gekennzeichnet, dass** ein äußerer Abschnitt (16) jedes Auslegers (14) in einem vorgegebenen Winkel zu dem Ausleger (14) verläuft.

5. Windenergieanlage nach einem der Ansprüche 2 bis 4,
**dadurch gekennzeichnet, dass** sich der Querschnitt wenigstens eines Auslegers (14) eines Tragarmes (12) oder eines Tragarmes (12) zu seinem von der Basis (18) entfernten Ende hin verringert.

6. Windenergleanlage nach einem der Ansprüche 2 bis 5,
**dadurch gekennzeichnet, dass** an dem von dem Ausleger (14) abgewandten Ende des Abschnittes (16) eine Platte (17) angeordnet ist, deren Fläche größer als die Querschnittsfläche des Abschnittes (16) ist.

7. Wiridenergleanlage nach einem der Ansprüche 2 bis 6,
**dadurch gekennzeichnet, dass** die Tragarme (12) als Einzelsegmente eingebaut sind und in situ als Statorträger (10) zusammenwirken.

8. Windenergleanlage nach einem der Ansprüche 2 bis 6.
**dadurch gekennzeichnet dass** wenigstens zwei Tragarme (12) zu Segmenten miteinander verbunden sind, wobei die Segmente in situ als Statorträger zusammenwirken.

9. Windenergieanlage nach einem der Ansprüche 2 bis 6,
**dadurch gekennzeichnet, dass** die Tragarme (12) zu einem einstückigen Statorträger (10) miteinander verbunden werden.

10. Tragkonstruktion für einen Ringgenerator zum Tragen eines Stators des Ringgenerators, wobei die Tragkonstruktion mehrere Tragarme aufweist, **dadurch gekennzeichnet, dass** die Tragarme jeweils aus einer Stabkonstruktion bestehen, wobei eine Tragplatte zum Befestigen des Stators an einem Ende eines Tragarmes derart angeordnet ist, dass die Tragplatte axial zur Tragkonstruktion beabstandet ist.

## Claims

1. A ring generator, comprising
a stator which has a stator ring and stator windings,
a rotor, and
a support structure for holding the stator, wherein
the support structure has a plurality of support arms, **characterised in that** the support arms each consist of a bar structure, a support plate for fastening the stator to one end of a support arm being mounted in such a manner that the support plate is axially spaced from the support structure.

2. A wind power installation having a generator according to claim 1.

3. A wind power installation according to claim 2,
**characterised in that** at least one support arm (12) of the stator support (10) is divided into at least two extension arms (14).

4. A wind power installation according to either claim 2 or claim 3,
**characterised in that** an outer portion (16) of each extension arm (14) extends at a predetermined angle to the extension arm (14).

5. A wind power installation according to any one of claims 2 to 4,
**characterised in that** the cross-section of at least one extension arm (14) of a support arm (12) or of a support arm (12) diminishes toward the end thereof remote from the base (18).

6. A wind power installation according to any one of claims 2 to 5,
**characterised in that**, at the end of the portion (16) remote from the extension arm (14), a plate (17) is arranged whose surface area is greater than the surface area of the cross-section of the portion (16).

7. A wind power installation according to any one of claims 2 to 6,
**characterised in that** the support arms (12) are installed as individual segments and cooperate in situ as a stator support (10).

8. A wind power installation according to any one of claims 2 to 6,
**characterised in that** at least two support arms (12) are joined to one another to form segments, the segments cooperating in situ as a stator support (10).

9. A wind power installation according to any one of claims 2 to 6,
**characterised in that** the support arms (12) are joined to one another to form a one-piece stator support (10).

10. A support structure for a ring generator for supporting a stator of the ring generator, the support structure having a plurality of support arms, **characterised in that** the support arms each consist of a bar structure, a support plate for fastening the stator to one end of a support arm being arranged in such a manner that the support plate is axially spaced from the support structure.

## Revendications

1. Générateur à anneaux, avec
un stator, lequel présente un anneau de stator et des enroulements de stator,
un rotor, et
une structure portante pour supporter le stator, la structure portante présentant plusieurs bras supports,
**caractérisé en ce que** les bras support se composent d'une construction à barres, une plaque support destinée à la fixation du stator étant disposée à une extrémité d'un bras support de telle sorte que la plaque support est écartée axialement par rapport à la structure portante.

2. Installation d'énergie éolienne avec un générateur selon la revendication 1.

3. Installation d'énergie éolienne selon la revendication 2,
**caractérisée en ce qu'**au moins un bras support (12) du support de stator (10) se divise en au moins deux bras (14).

4. Installation d'énergie éolienne selon l'une quelconque des revendications 2 ou 3,
**caractérisée en ce qu'**un tronçon extérieur (16) de chaque bras (14) s'étend à un angle spécifié par rapport au bras (14).

5. Installation d'énergie éolienne selon l'une quelconque des revendications 2 à 4,
**caractérisée en ce que** la section transversale d'au moins un bras (14) d'un bras support (12) ou d'un bras support (12) se rétrécit en direction de son extrémité éloignée de la base (18).

6. Installation d'énergie éolienne selon l'une quelconque des revendications 2 à 5,
**caractérisée en ce qu'**à l'extrémité du tronçon (16) qui est déviée du bras (14) est fixée une plaque (17) dont la surface est plus grande que la surface de la section transversale du tronçon (16).

7. Installation d'énergie éolienne selon l'une quelconque des revendications 2 à 6,
**caractérisée en ce que** les bras supports (12) sont conçus sous forme de segments individuels et opèrent conjointement in situ en tant que supports de stator (10).

8. Installation d'énergie éolienne selon l'une quelconque des revendications 2 à 6,
**caractérisée en ce qu'**au moins deux bras supports (12) sont reliés l'un à l'autre pour former des segments, les segments opérant conjointement in situ en tant que supports de stator.

9. Installation d'énergie éolienne selon l'une quelconque des revendications 2 à 6,
**caractérisée en ce que** les bras supports (12) sont reliés les uns aux autres pour former un support de stator (10) monobloc.

10. Structure portante pour un générateur à anneaux destinée à supporter un stator du générateur à anneaux, la structure portante présentant plusieurs bras supports, **caractérisée en ce que** les bras support se composent d'une construction à barres, une plaque support destinée à la fixation du stator étant disposée à une extrémité d'un bras support de telle sorte que la plaque support est espacée axialement par rapport à la structure portante.
